# EUROPEAN PATENT SPECIFICATION

(11) **EP 2 630 861 B1**
(45) Date of publication and mention of the grant of the patent: **26.04.2017**
(21) Application number: 13156381.9
(22) Date of filing: 22.02.2013
(51) Int. Cl.: A01G 9/02, E04C 2/288

(54) **Wall element for a green facade of a building and method for manufacturing such a wall element**
Wandelement für eine grüne Fassade eines Gebäudes und Verfahren zur Herstellung eines solchen Wandelementes
Élément de paroi pour une façade de bâtiment verte et procédé de fabrication d'un tel élément de paroi

(30) Priority: 24.02.2012 NL 2008343
(43) Date of publication of application: 28.08.2013
(73) Proprietor: 247 Invest B.V., 6961 DV Eerbeek (NL)
(72) Inventor: Bongers, Wilhelmus Jacobus, 7000 AH Doetinchem (NL)
(74) Representative: Mink-Lindenburg, Charlotte Hildegard

(56) References cited:
- FR-A1- 2 547 848
- FR-A1- 2 939 275
- FR-A1- 2 951 906

## Description

The present invention relates to a wall element for forming a green facade for a building.

Buildings in urban areas are provided increasingly often with a green facade, also referred to as a vertical garden. Vertical gardens can be applied both inside and outside. Green facades or vertical gardens are accepted by the public and have diverse advantages. Known advantages in terms of building physics are an improved sound-proofing, an improved heat insulation and filtering of fine dust and carbon dioxide from the air. A significant aesthetic advantage is the provision of green views in urban areas.

Diverse systems are known in practice for assembly of trays with plants using support members on a plate-like structure. Specialist companies, usually professional gardeners or green amenities suppliers, have to be employed for the assembly, this entailing high assembly costs.

A wall element according to the preamble of claim 1 is known from FR2547848.

The present invention has for its object to provide a unique wall element for forming a green facade for a building at low cost.

The wall element according to the invention comprises: a plate-like structure, a layer of insulating material attached to at least one side of the plate-like structure, a number of anchors, each arranged with an outer end in the plate-like structure and protruding with an opposite free outer end through the insulating material, a number of support members which can be mounted releasably on the free outer ends of the anchors, and a number of trays with plants which can be attached ordered in substantially continuous rows and columns to the plate-like structure by means of the support members.

The wall element according to the invention is highly suitable for application as outer wall in the construction of a new building. This is because the wall element functions as cavity wall, wherein the plate-like structure forms a first wall and the substantially continuous trays with plants a second wall, between which the insulating material extends. The wall element according to the invention is also suitable for use in the renovation of buildings. The wall element can then be used to replace the whole facade or the outer leaf thereof.

Applying the wall element according to the invention enables the assembly costs and the production costs of a green facade to remain low.

In a first preferred embodiment the wall element according to the invention is further provided with at least one continuous, generally channel-like opening extending through the structure and the insulating material, which opening is configured to receive a liquid conduit for connection to a liquid feed. According to a further elaboration of the first preferred embodiment, each tray is configured on the upper side to receive a further liquid conduit for connection to the liquid conduit, which further liquid conduit is provided with outflow openings, wherein the tray is provided with irrigation channels for co-action with the outflow openings. Irrigation of the plants in the trays can now be performed in simple manner by using the water connection. The maintenance costs for a green facade consisting of one or more wall elements according to the invention can therefore likewise remain low.

In a further preferred embodiment each anchor takes an angular form, preferably a generally U-shaped or generally L-shaped form, and each anchor is configured at the free outer end to receive a part of a support member. Each anchor is preferably provided at the free outer end with a slot-like recess and each support member is preferably provided with a hook-shaped tongue configured to be received in the slot-like recess. In this preferred embodiment the support members can be attached quickly and reliably to the anchors. It is not necessary here to call in specialist companies such as professional gardeners or green amenities suppliers.

The present invention also relates to a method for manufacturing the wall element according to the invention, wherein the method is characterized by the following steps of:
a. manufacturing the plate-like structure, for instance casting a concrete structure, at a first location;
b. attaching a number of anchors to the structure at predetermined positions in rows and columns, for instance casting of the anchors in the concrete wall, at the first location;
c. arranging insulating material on at least one side of the structure at the first location;
d. transporting the structure manufactured as according to steps a), b) and c) to a second location;
e. mounting a number of support members on the anchors at the second location, wherein the support members are configured to support the trays;
f. attaching the trays to the support members at the second location.

A method for manufacturing a wall element according to the preamble of claim 6 is known from FR2547848.

The first location can advantageously be a prefab location, while the second location can be the final construction location. The production costs can hereby be further reduced. Applying releasably mountable support members and easily accessible anchors for receiving the support members makes it possible to limit the assembly costs at the construction site to a minimum.

According to a first preferred embodiment, the method according to the invention further comprises the step of: arranging at the first location at least one continuous, generally channel-like opening extending through the structure and the insulating material. Production costs can be kept low if the channel-like continuous openings are arranged in prefab manner. The end user can determine him/herself whether use will be made of this integrated irrigation option at the construction site.

According to a further preferred embodiment of the method according to the invention, the method further comprises the step of: arranging at the second location at least one liquid conduit in the channel-like opening and connecting the liquid conduit to a liquid feed such as a water supply. As stated, this preferred embodiment can be applied optionally and at the discretion of the end user.

According to another preferred embodiment of the method according to the invention, step c) comprises of placing on the anchors a sheet of insulating material and pressing the insulating material through the anchors such that the free outer ends of the anchors protrude through the insulating material and the insulating material connects against the plate-like structure. Arranging of the insulating material can be performed in simple manner at the first location when the structure is still in a horizontal position after curing of the casting.

The invention will now be further elucidated with reference to the accompanying figures, in which:
Figure 1 is a schematic view of a preferred embodiment of a wall element according to the present invention;
Figure 2A shows the wall element of figure 1 in cross-section;
Figure 2B shows a part of figure 2A in more detail;
Figure 3A is a schematic view of an anchor as part of the wall element of figure 1;
Figure 3B shows a support member as part of the wall element of figure 1;
Figures 4A and 4B show a plant tray as part of the wall element of figure 1;
Figure 5A is a schematic view of the wall element of figure 1 in a first assembled position; and
Figure 5B shows the wall element of figure 1 in cross-section in a second assembled position.

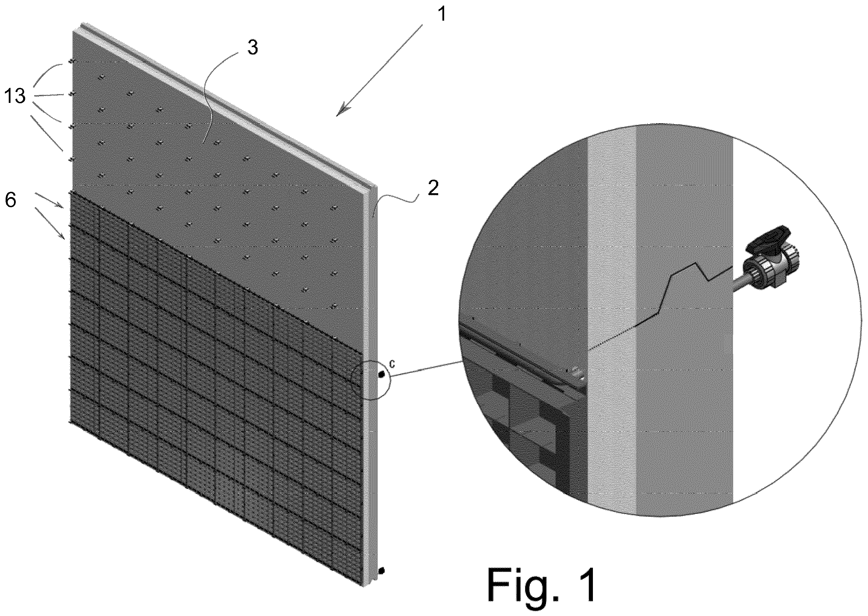

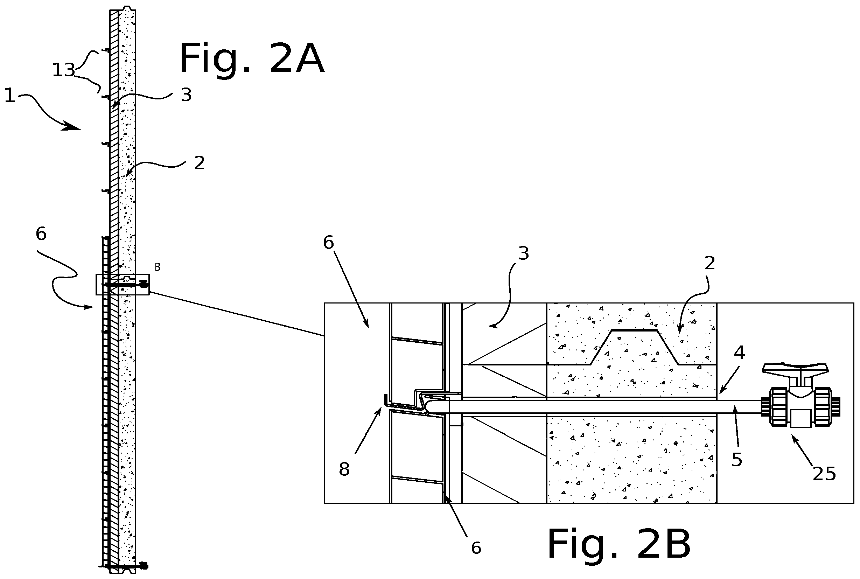

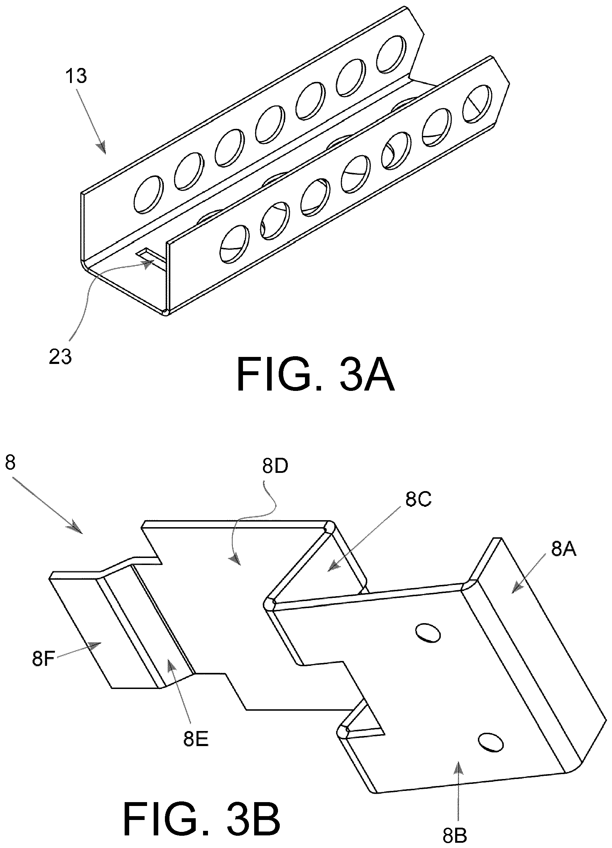

Figure 1 shows a further preferred embodiment of a wall element 1 according to the present invention. Wall element 1 comprises a plate-like structure 2 as basis. Arranged on one side of structure 2 is a layer of insulating material 3. A number of anchors 13 are each anchored with one outer end in structure 2 and protrude at least partially through the insulating material so that the opposite free outer end is visible in figure 1. Anchors 13 are arranged in rows and columns. A number of support members 8 are mounted releasably on the free outer ends of anchors 13 (see figures 2A, 2B and 3B). Support members 8 serve to attach trays 6 to wall element 1. In the shown preferred embodiment trays 6 comprise plants and trays 6 are attached by means of support members 8 and ordered in substantially continuous rows and columns running at least substantially perpendicularly of the rows.

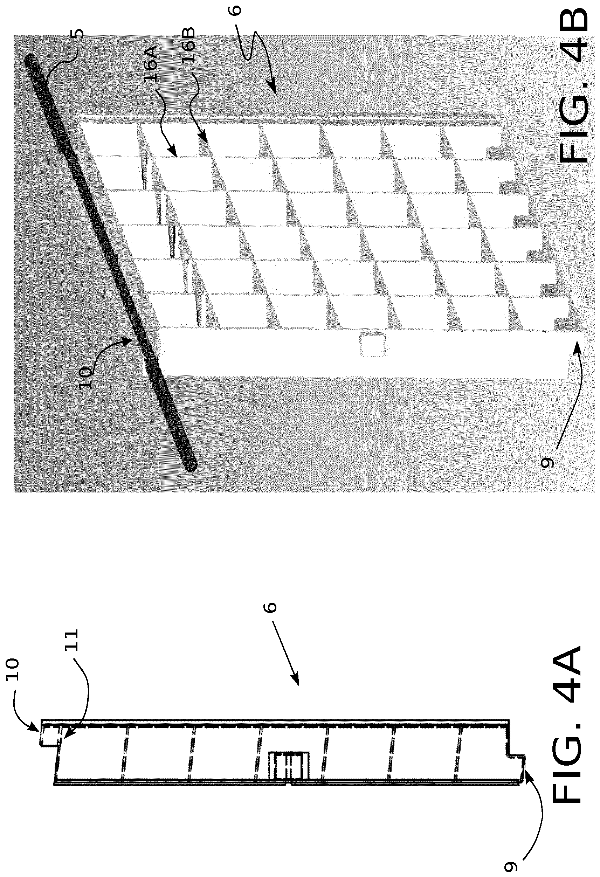

Figures 2A and 2B show cross-sectional views through wall element 1. Shown here are generally channel-like openings 4 extending through structure 2 and insulating material 3 and therefore forming through-channels 4. Situated in channels 4 are liquid conduits, for instance hoses 5, which are configured for connection to a liquid feed 25 such as a water connection 25. Each wall element 1 is preferably provided with at least one opening for the liquid conduit, and each tray 6 is provided with a number of openings for passage of water. A preferred embodiment of tray 6 is shown in more detail in figure 4.

Figure 3A shows a preferred embodiment of an anchor 13 suitable for use as part of wall element 1 according to the invention. Anchor 13 preferably takes a generally U-shaped form. Anchor 13 also has a length which is sufficiently long to allow a free outer end to protrude through the layer of insulating material 3 while the other outer end can be anchored in structure 2.

Figure 3B shows a preferred embodiment of a support member 8 suitable for application as part of wall element 1 according to the invention. In the shown preferred embodiment support member 8 and anchor 13 are configured for releasable attachment to each other. Anchor 13 is provided for this purpose on the free outer end with a slot-like recess 23 and support member 8 with a hook-shaped tongue 8F. Tongue 8F is configured to be received in slot-like recess 23.

Trays 6 and support members 8 are preferably configured to receive a tray clampingly between support members placed adjacently of respectively the upper side and the underside of the tray.

Figure 4A shows a cross-section through a preferred embodiment of a tray 6 suitable for application as part of the wall element 1 according to the invention. Figure 4B shows a schematic view of tray 6 of figure 4A. Each tray 6 is provided on the underside with a rib or protrusion 9. Each tray 6 is provided on the upper side with a rib or protrusion 10. Protrusion 9 is located close to the open or front side of tray 6. Protrusion 10 is located close to the closed or rear side of tray 6. Support member 8 is provided with a generally U-shaped part intended to receive first protrusion 9. Protrusion 10 of the tray 6 placed adjacently thereabove or thereunder is intended for placing against the U-shaped part of support member 8. Each tray 6 is attached in secured manner to structure 2 on two opposite sides by at least two support members 8.

Each support member 8 is provided with an upright edge 8A intended to enclose the open side of tray 6. Extending between edge 8A and hook-shaped tongue 8F, which is connected to support member 8 by means of bridge 8E, is a central portion which is generally Z-shaped. The Z-shape comprises elements 8B, 8C and 8D which are mutually connected. Element 8C forms an acute angle with both element 8B and element 8D. Owing to this acute angle the rib or protrusion 10 of tray 6 can be received clampingly against the U-shaped part of support member 8. This U-shaped part is formed by upright edge 8A, element 8B and element 8C.

Each tray 6 is provided on the upper side with a passage for a further liquid conduit 5, for instance in rib or protrusion 10. In the shown preferred embodiment rib or protrusion 10 takes an at least partially hollow form for the purpose of receiving tube or hose 5. Irrigation channels 11 are arranged in rib or protrusion 10 adjacently of this passage at the position of (dripper) openings or outflow openings in liquid conduit 5. If wall element 1 is connected during use to a water connection 25, the water will flow through structure 2 and insulating layer 3 into trays 6, after which as a result of gravitational force it flows downward through the trays and waters the plants.

In the shown preferred embodiment tray 6 is divided by means of partitions 16A and 16B.

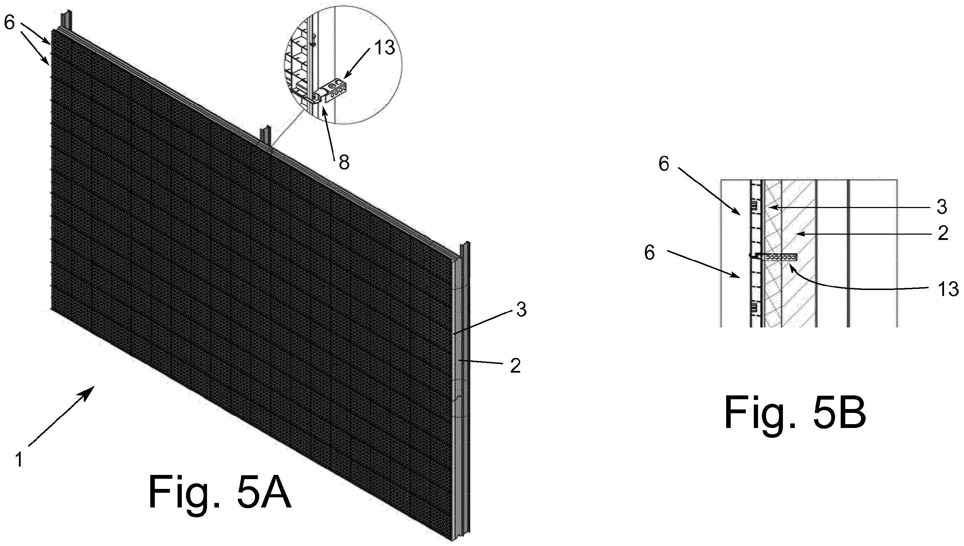

Figure 5A is a schematic view of wall element 1 in a first assembled position on rails and figure 5B shows wall element 1 in partial cross-section in a second assembled position on a further plate-like structure. Figures 5A and 5B show support member 8 and anchor 13 in assembled position.

The invention also relates to a method for manufacturing a wall element 1 according to the invention.

In a first step the plate-like structure 2 is manufactured at a first location. This first step comprises for instance of casting a concrete structure 2.

Anchors 13 are then attached to structure 2 at the first location. This takes place at predetermined positions, in rows and columns and taking into account the dimensions of trays 6. In this second step the anchors 13 can be cast in concrete structure 2.

Insulating material 3 is subsequently arranged on at least one side of structure 2. Plate-like insulating material is preferably pressed through anchors 13.

The above stated method steps can advantageously take a prefab form, with all the advantages this entails. The thus manufactured prefab structure is then transported to a second location, preferably the construction location. At this second location a number of support members 8 are mounted releasably on anchors 13. Trays 6 can then be attached to support members 8 at the second location.

The trays are filled prior to mounting with a substrate in which preferably sedum, moss and/or succulents are planted or sown. In this way an attractive green wall can be realized which is green immediately upon being mounted and requires little maintenance. Because a very thin substrate is sufficient for sedum in particular, the weight added by the system can be kept very low.

Preferably arranged at the first location is at least one continuous, generally channel-like opening extending through the structure and the insulating material. This method step can also be performed in prefab manner.

At the second location or construction location at least one liquid conduit can then optionally be arranged in the channel-like opening and the liquid conduit can be connected to a liquid feed.

The liquid conduits can alternatively be arranged at the first location. The liquid conduits could even be cast in the concrete during the first step of forming the concrete structure 2.

The invention is of course not limited to the described and shown preferred embodiments but extends to any embodiment falling within the scope of protection as defined in the claims and as seen in the light of the foregoing description and accompanying drawings.

## Claims

1. Wall element (1) for forming a green facade for a building, comprising: a plate-like structure (2), a layer of insulating material (3) attached to at least one side of the plate-like structure (2), a number of anchors (13), each arranged with an outer end in the plate-like structure (2) and protruding with an opposite free outer end through the insulating material (3), and a number of support members (8) which can be mounted releasably on the free outer ends of the anchors (13), **characterized in that** it further comprises a number of trays (6) with plants which can be attached ordered in substantially continuous rows and columns to the plate-like structure (2) by means of the support members (8).

2. Wall element (1) as claimed in claim 1, wherein the wall element (1) is further provided with at least one continuous, generally channel-like opening (4) extending through the structure (2) (2) and the insulating material (3), which opening (4) is configured to receive a liquid conduit (5) for connection to a liquid feed (25).

3. Wall element (1) as claimed in claim 2, wherein each tray (6) is configured on the upper side to receive a further liquid conduit (5) for connection to the liquid conduit (5), which further liquid conduit (5) is provided with outflow openings, wherein the tray (6) is provided with irrigation channels (11) for co-action with the outflow openings.

4. Wall element (1) as claimed in claim 1, 2 or 3, wherein each anchor (13) takes an angular form, preferably a generally U-shaped or generally L-shaped form, and is configured at the free outer end to receive a part of a support member (8).

5. Wall element (1) as claimed in claim 4, wherein each anchor (13) is provided at the free outer end with a slot-like recess (23) and wherein each support member (8) is provided with a hook-shaped tongue (8F) configured to be received in the slot-like recess (23).

6. Method for manufacturing the wall element (1) as claimed in any of the foregoing claims, wherein the method comprises the following steps of:
a. manufacturing the plate-like structure (2), for instance casting a concrete structure, at a first location;
b. attaching a number of anchors (13) to the structure (2) (2) at predetermined positions in rows and columns, for instance casting of the anchors (13) in the concrete wall, at the first location;
c. arranging insulating material (3) on at least one side of the structure (2) at the first location; and
d. transporting the structure (2) manufactured as according to steps a), b) and c) to a second location;
**characterized by the additional following steps:**
e. mounting a number of support members (8) on the anchors (13) at the second location, wherein the support members (8) are configured to support the trays (6); and
f. attaching the trays (6) to the support members (8) at the second location.

7. Method as claimed in claim 6, wherein the method further comprises the step of: arranging at the first location at least one continuous, generally channel-like opening (4) extending through the structure (2) and the insulating material (3).

8. Method as claimed in claim 7, wherein the method further comprises the step of: arranging at the second location at least one liquid conduit (5) in the channel-like opening (4) and connecting the liquid conduit (5) to a liquid feed (25).

9. Method as claimed in claim 6, 7 or 8, wherein step c) comprises of placing on the anchors (13) a sheet of insulating material (3) and pressing the insulating material (3) through the anchors (13) such that the free outer ends of the anchors (13) protrude through the insulating material (3) and the insulating material (3) connects against the plate-like structure (2).

## Patentansprüche

1. Wandelement (1) zum Ausbilden einer grünen Fassade für ein Gebäude, umfassend: eine plattenartige Struktur (2), eine Schicht aus isolierendem Material (3), die an mindestens einer Seite der plattenartigen Struktur (2) befestigt ist, eine Anzahl von Ankern (13), die jeweils mit einem äußeren Ende in der plattenartigen Struktur (2) angeordnet sind und mit einem gegenüberliegenden freien äußeren Ende durch das isolierende Material (3) hindurchragen, und eine Anzahl von Stützelementen (8), die lösbar an den freien äußeren Enden der Anker (13) montierbar sind, **dadurch gekennzeichnet, dass** es weiterhin eine Anzahl von Schalen (6) mit Pflanzen umfasst, die in im Wesentlichen kontinuierlichen Reihen und Kolonnen auf der plattenförmigen Struktur (2) mittels der Stützelemente (8) befestigbar sind.

2. Wandelement (1) nach Anspruch 1, wobei das Wandelement (1) ferner mit mindestens einer kontinuierlichen, im Allgemeinen kanalartigen Öffnung (4), die sich durch die Struktur (2) und das Isoliermaterial (3) erstreckt, wobei die Öffnung (4) ausgebildet ist, um eine Flüssigkeitsleitung (5) zur Verbindung mit einer Flüssigkeitszuführung (25) aufzunehmen.

3. Wandelement (1) nach Anspruch 2, wobei jede Schale (6) an der Oberseite ausgebildet ist, um eine weitere Flüssigkeitsleitung (5) zur Verbindung mit der Flüssigkeitsleitung (5) aufzunehmen, welche weitere Flüssigkeitsleitung (5) mit Ausströmöffnungen versehen ist, wobei die Schale (6) mit Bewässerungskanälen (11) zum Zusammenwirken mit den Ausströmöffnungen versehen ist.

4. Wandelement (1) nach Anspruch 1, 2 oder 3, wobei jeder Anker (13) eine Winkelform annimmt, vorzugsweise eine im Allgemeinen U-förmige oder im Allgemeinen L-förmige Gestalt aufweist, und an dem freien äußeren Ende ausgebildet ist, um einen Teil eines Stützelements (8) zu empfangen.

5. Wandelement (1) nach Anspruch 4, wobei jeder Anker (13) am freien äußeren Ende mit einer schlitzartigen Ausnehmung (23) versehen ist und wobei jedes Stützelement (8) mit einer hakenförmigen Zunge (8F) versehen ist, die ausgebildet ist, um in der schlitzartigen Ausnehmung (23) aufgenommen zu werden.

6. Verfahren zur Herstellung des Wandelements (1) nach einem der vorhergehenden Ansprüche, wobei das Verfahren die folgenden Schritte umfasst:
a. Herstellen der plattenartigen Struktur (2), beispielsweise Gießen einer Betonstruktur, an einer ersten Stelle;
b. Befestigen einer Anzahl von Ankern (13) an der Struktur (2) an vorbestimmten Positionen in Reihen und Kolonnen, beispielsweise Eingießen der Anker in der Betonwand, an der ersten Stelle;
c. Anordnen von isolierendem Material (3) an zumindest einer Seite der Struktur (2) an der ersten Stelle; und
d. Transportieren der gemäß der Schritte a., b. und c) hergestellten Struktur (2) zu einer zweiten Stelle;
**gekennzeichnet durch die folgenden zusätzlichen Schritte:**
e. Montieren einer Anzahl von Stützelementen (8) auf den Ankern (13) an der zweiten Stelle, wobei die Stützelemente (8) ausgebildet sind, um die Schalen zu unterstützen; und
f. Befestigen der Schalen (6) an den Stützelementen (8) an der zweiten Stelle.

7. Verfahren nach Anspruch 6, wobei das Verfahren ferner den folgenden Schritt umfasst: Anordnen an der ersten Stelle mindestens einer durchgehenden, im Allgemeinen kanalartigen Öffnung (4), die sich durch die Struktur (2) und das isolierende Material (3) erstreckt.

8. Verfahren nach Anspruch 7, wobei das Verfahren ferner den folgenden Schritt umfasst: Anordnen an der zweiten Stelle mindestens einer Flüssigkeitsleitung (5) in der kanalartigen Öffnung (4) und Verbinden der Flüssigkeitsleitung (5) mit einem Flüssigkeitszuführung (25).

9. Verfahren nach Anspruch 6, 7 oder 8, wobei Schritt c) das Platzieren auf den Ankern (13) einer Platte von isolierendem Material (3) und das Pressen des isolierenden Materials (3) durch die Anker (13) umfasst, derart, dass die freien äußeren Enden der Anker (13) durch das isolierende Material (3) hindurchragen und das isolierende Material (3) an die plattenartige Struktur (2) angekoppelt ist.

## Revendications

1. Élément de paroi (1) pour former une façade de bâtiment verte, comprenant :
une structure en forme de plaque (2), une couche de matériau isolant (3) fixée sur au moins un côté de la structure en forme de plaque (2), une pluralité de pièces d'ancrage (13) disposées chacune avec une extrémité extérieure dans la structure en forme de plaque (2) et saillantes à travers le matériau isolant (3) avec une extrémité libre extérieure opposée, et
une pluralité d'éléments support (8) qui peuvent être montés de façon amovible sur les extrémités extérieures libres des pièces d'ancrage (13), **caractérisé en ce qu**'il comprend en outre
une pluralité de plateaux (6) avec des plantes qui peuvent être fixés sur la structure en forme de plaque (2) en étant disposés en rangées et en colonnes sensiblement continues au moyen des éléments support (8).

2. Élément de paroi (1) selon la revendication 1, dans lequel l'élément de paroi (1) est en outre pourvu d'au moins une ouverture continue (4), généralement en forme de canal, qui s'étend à travers la structure (2) et le matériau isolant (3), ladite ouverture étant configurée pour recevoir une conduite de liquide (5) pour un raccordement à une alimentation en liquide (25).

3. Élément de paroi (1) selon la revendication 2, dans lequel chaque plateau (6) est configuré sur le côté supérieur pour recevoir une conduite de liquide (5) supplémentaire pour un raccordement à la conduite de liquide (5), laquelle conduite de liquide supplémentaire (5) est pourvue d'ouvertures de sortie, le plateau (6) étant pourvu de canaux d'irrigation (11) pour coopérer avec les ouvertures de sortie.

4. Élément de paroi (1) selon la revendication 1, 2 ou 3, dans lequel chaque pièce d'ancrage (13) a une forme angulaire, de préférence une forme générale en U ou en L et est configurée à l'extrémité extérieure libre pour recevoir une partie d'un élément support (8).

5. Élément de paroi (1) selon la revendication 4, dans lequel chaque pièce d'ancrage (13) est munie à l'extrémité extérieure libre d'un évidement (23) en forme de fente et dans lequel chaque élément support (8) est pourvu d'une languette (8F) en forme de crochet configurée pour être reçue dans l'évidement en forme de fente (23).

6. Procédé de fabrication de l'élément de paroi (1) selon l'une quelconque des revendications précédentes, lequel procédé comprend les étapes suivantes consistant :
(a) à fabriquer la structure en forme de plaque (2), par exemple à couler une structure en béton, en un premier lieu ;
(b) à fixer une pluralité de pièces d'ancrage à la structure (2) à des positions prédéterminées dans des rangées et des colonnes, par exemple à couler les pièces d'ancrage (13) dans la paroi en béton, au premier lieu :
(c) à disposer un matériau isolant (3) sur au moins un côté de la structure (2) au premier lieu ;
et
(d) à transporter la structure (2) fabriquée selon les étapes a), b) et c) en un deuxième lieu ;
**caractérisé par les étapes supplémentaires suivantes consistant :**
(e) à monter une pluralité d'éléments support (8) sur les pièces d'ancrage (13) au deuxième lieu, les éléments support (8) étant configurés pour supporter les plateaux (6) ;
et
(f) à attacher les plateaux (6) aux éléments support (8) au deuxième lieu.

7. Procédé selon la revendication 6, dans lequel le procédé comprend en outre l'étape consistant à : installer au premier lieu au moins une ouverture continue (4), généralement en forme de canal, qui s'étend à travers la structure (2) et le matériau isolant (3).

8. Procédé selon la revendication 7, dans lequel le procédé comprend en outre l'étape consistant à : installer au deuxième lieu, au moins une conduite de liquide (5) dans l'ouverture en forme de canal (4) et à raccorder la conduite de liquide (5) à une alimentation en liquide (25).

9. Procédé selon la revendication 6, 7 ou 8, dans lequel l'étape c) comprend l'étape consistant à placer sur les pièces d'ancrage (13) une feuille de matériau isolant (3) et à presser le matériau isolant (3) à travers les pièces d'ancrage (13) de telle sorte que les extrémités extérieures libres des pièces d'ancrage (13) saillent à travers le matériau isolant (3) et le matériau isolant (3) vient en contact contre la structure en forme de plaque (2).
